# EUROPÄISCHE PATENTSCHRIFT

(11) **EP 3 654 809 B1**
(45) Veröffentlichungstag und Bekanntmachung des Hinweises auf die Patenterteilung: **09.02.2022**
(21) Anmeldenummer: 18732279.7
(22) Anmeldetag: 08.06.2018
(51) Int. Cl.: A47J 31/44

(54) **VERFAHREN ZUM MANUELLEN STEUERN EINER BEDIENEINHEIT FÜR DIE ABGABE VON DAMPF AUS EINER KAFFEEMASCHINE, SOWIE ENTSPRECHENDE BEDIENEINHEIT**
METHOD FOR MANUALLY CONTROLLING AN OPERATING UNIT FOR DISPENSING STEAM FROM A COFFEE MACHINE AND CORRESPONDENT OPERATING UNIT
PROCÉDÉ POUR COMMANDER MANUELLEMENT UNE UNITÉ DE COMMANDE DE DISTRIBUTION DE VAPEUR DANS UNE MACHINE À CAFÉ ET UNITÉ DE COMMANDE CORRESPONDANTE

(30) Priorität: 20.07.2017 CH 9452020
(43) Veröffentlichungstag der Anmeldung: 27.05.2020
(73) Patentinhaber: Steiner AG Weggis, 6353 Weggis (CH)
(72) Erfinder: STEINER, Adrian, 6353 Weggis (CH)
(74) Vertreter: Luchs, Willi
(86) Internationale Anmeldenummer: PCT/EP2018/065124
(87) Internationale Veröffentlichungsnummer: WO 2019/015865

(56) Entgegenhaltungen:
- EP-A1- 1 656 862
- EP-A1- 3 065 605
- WO-A1-2010/121299
- WO-A1-2017/068522

## Beschreibung

Die Erfindung betrifft eine Bedieneinheit für die Abgabe von Dampf aus einer Kaffeemaschine und ein Verfahren zum manuellen Steuern einer solchen Bedieneinheit.

Für die Erzeugung von Dampf insbesondere in einer Kaffeemaschine ist es bekannt, wie in der Druckschrift DE 44 45 436 offenbart ist, die Dampfzufuhr von einem einfachen Ventil als manuelle Bedieneinheit mengenmässig zu steuern. Die Dampfabgabe wird im Wesentlichen für die Zubereitung von milchhaltigen Kaffeespezialitäten, wie Cappuccino, Latte Macchiato oder Milchkaffee, und dabei für die Erzeugung von Milchschaum verwendet. Der heisse Dampf kann mit Druckluft versetzt bzw. gemischt und über eine in die Milch in einer Tasse oder einem Gefäss eintauchende Lanze zugeführt werden, so dass die Milch aufgewärmt und sich durch Auf- und Abbewegungen der Tasse beim Dampfeinlass der gewünschte Milchschaum bildet.

Das Dokument EP-A-1 656 862 offenbart eine Dampfspendevorrichtung, die eine Dampfverschraubung aufweist, die dazu geeignet ist, eine Dampfquelle und eine Dampfverbrauchsstelle in Verbindung miteinander zu bringen. Es ist ein Schieber vorgesehen, der zum Öffnen und Schliessen der Dampfverschraubung mit mindestens einer Translationsbewegung geeignet ist. Zudem ist ein Nockentrieb integriert, der den Schieber betätigt, um so das Öffnen und Schliessen zu bewirken. Der Nockentrieb weist eine Nockenbahn, die eine vorbestimmte Drehachse umgibt, sowie einen Steuernocken auf, der durch Rotation um die Drehachse auf der Nockenbahn geführt ist. Es ist mindestens ein Griff oder dergleichen vorhanden, der manuell betätigt werden kann und zum Bedienen der Vorrichtung dient. Mit dieser Vorrichtung kann durch die Linearverstellung des Schiebers das Öffnen oder Schliessen der Dampfzufuhr verschiedenartig bewirkt werden.

Bei einer Druckschrift WO-A-2010/121299 ist eine Dampferzeugungseinrichtung mit einer Dampflanze und einem Steuerventil zum Steuern des Dampfdurchgangs beschrieben. Die Dampflanze enthält einen Temperatursensor zum Erfassen der Temperatur der Flüssigkeit in einem Krug. Bei Erreichen einer vorgegebenen Temperatur kann dies angezeigt und die Dampfzufuhr u.a. automatisch gestoppt werden. Mit dieser Einrichtung ist aber nicht ein manuelles Verstellen der Dampfmenge vorgesehen.

Der Erfindung ist die Aufgabe zugrundegelegt worden, ein Verfahren zum manuellen Steuern sowie eine Bedieneinheit für die Abgabe von Dampf aus einer Kaffeemaschine derart weiterzuentwickeln, dass der Milchschaum in Abhängigkeit der in einer Tasse oder dergleichen befindlichen Milchmenge mit einer einfachen Bedienung optimal erzeugt werden kann.

Die Aufgabe ist erfindungsgemäss durch eine Bedieneinheit nach den Merkmalen des Anspruchs 1 und ein Verfahren nach den Merkmalen des Anspruchs 6 gelöst. Dieses erfindungsgemässe Verfahren zeichnet sich somit dadurch aus, dass der Milchschaum je nach der gewünschten Abgabeart in Abhängigkeit der in einer Tasse oder dergleichen befindlichen Milchmenge optimal erzeugt werden kann, bei der zum einen die Milch nicht zu schnell aufgeheizt wird und zum andern der Schaum mit dem Aufheizen mit einer optimalen Konsistenz gebildet werden kann.

Bei der manuellen Bewegung in die eine Richtung ist das Bedienungselement für die Abgabe von Dampf aus einer Kaffeemaschine so ausgestaltet, dass es aus einer Grundstellung, bei der keine Dampfabgabe erfolgt, in wenigstens eine Einraststellung bewegt werden kann, die einer bestimmten Dampfmenge entspricht.

Sehr vorteilhaft wird dabei mit dem Verstellen des Bedienungselements in diese mindestens eine eingerastete Stellung die Temperatur der Milch gemessen und die Dampfabgabe bei Erreichen eines Sollwertes der Milchtemperatur gestoppt. Damit ist sichergestellt, dass die Milch nicht überhitzt wird und sie stets die gewünschte optimale Temperatur aufweist.

Bei der manuellen Bewegung des Bedienungselements in die entgegengesetzte Richtung kann der Dampf von einer kleinen Menge vorzugsweise stufenlos bis zu einer maximalen Dampfmenge reguliert ausgelassen werden.

Weitere vorteilhafte Ausführungsformen sind in den abhängigen Ansprüchen definiert.

Besonders vorteilhaft ist ausserdem, dass sowohl bei dem normalen nahezu automatisierten als auch bei dem manuellen Steuern in einfacher Weise optimale Getränke erzeugt werden können, auch wenn unterschiedliche Milchmengen, verschiedene Endtemperaturen für unterschiedliche Heissgetränkebereiche und/oder variierbare Milchschauminkonsistenzen vorliegen bzw. erzielt werden sollen.

Das Bedienungselement ist vorzugsweise als ein schwenkbarer Hebel oder ein Drehknopf ausgeführt. Weitere geometrische Formen für eine mögliche Ausführungsform des Bedienungselements sind denkbar.

In einer bevorzugten Ausführung ist das Bedienungselement in Kombination mit einer schwenkbaren Dampflanze an der Kaffeemaschine und gegebenenfalls selbst relativ zur Dampflanze verschwenkbar angebracht. Dies hat zum Vorteil, dass die Bedienung der Kaffeemaschine im manuellen Betrieb besonders einfach ist.

Zweckmässigerweise ist eine Entlüftungsleitung in der Dampflanze vorgesehen, welche via ein Ventil mit dem Inneren der Kaffeemaschine verbunden ist und ist dort offen, sodass bei geöffnetem Ventil Luft aus dem Inneren der Kaffeemaschine in die Dampflanze fliessen kann, um darin ein Vakuum und folglich ein Rücksaugen von Milch in die Dampflanze zu vermeiden, weil die heisse Milch in dieser anbacken und diese verstopfen würde.

Die Erfindung ist nachfolgend anhand von Ausführungsbeispielen unter Bezugnahme auf die Zeichnung näher erläutert. Es zeigen:
- Fig. 1: eine perspektivische Ansicht einer erfindungsgemässen Bedieneinheit mit einer Dampflanze an einer nicht gezeigten Kaffeemaschine;
- Fig. 2: einen Längsschnitt der Bedieneinheit nach Fig. 1;
- Fig. 3: eine Innenansicht einer Hülse mit dem Bedienungselement der Bedieneinheit nach Fig. 1;
- Fig. 4: einen Teilschnitt der Bedieneinheit nach Fig. 1;
- Fig. 5: einen Teilschnitt der Bedieneinheit nach Fig. 1 mit elektrischen Komponenten;
- Fig. 6: einen Teilschnitt der Bedieneinheit nach Fig. 1 von der gegenüberliegenden Seite mit den elektrischen Komponenten;
- Fig. 7: ein Bedienungselement in einer weiteren voreingestellten Stellung als der Grundstellung;
- Fig. 8: einen teilweisen Schnitt der Hülse mit dem Stift gemäss Fig. 3;
- Fig. 9: das Bedienungselement in einer anderen Auslenkung in entgegengesetzter Richtung;
- Fig. 10: einen teilweisen Schnitt der Hülse mit dem Stift gemäss Fig. 3;
- Fig. 11: das Bedienungselement in einer anderen Auslenkung in entgegengesetzter Richtung;
- Fig. 12: einen teilweisen Schnitt der Hülse mit dem Stift gemäss Fig. 3;
- Fig. 13: Querschnitte der Ventilöffnung für den Dampfauslass der Bedieneinheit; und
- Fig. 14: ein hydraulisches Schema der Bedieneinheit nach Fig. 1.

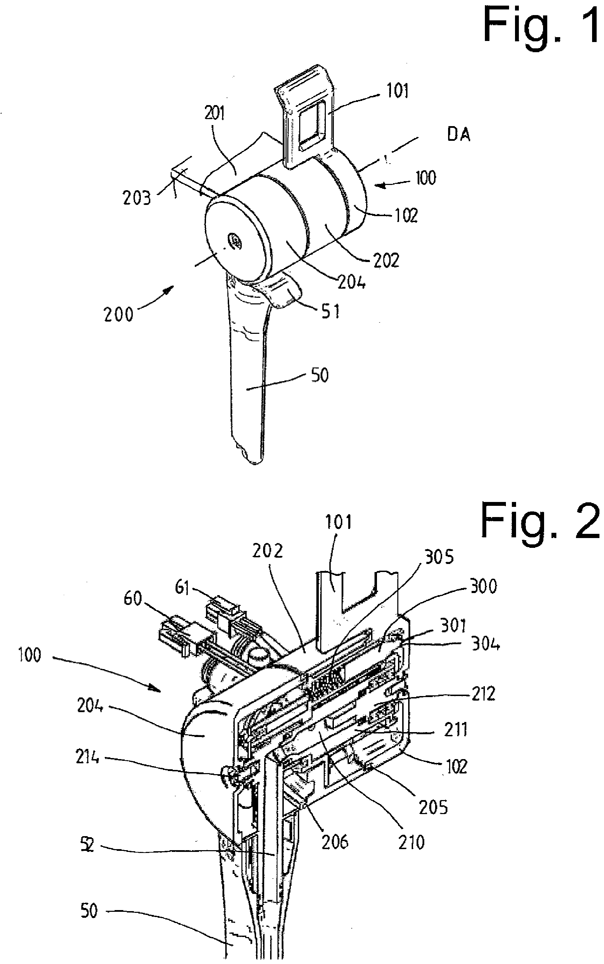

Fig. 1 zeigt eine Bedieneinheit 100 an einer nicht näher gezeigten Kaffeemaschine 200 mit einer Medienzuleitung 203. Diese Bedieneinheit 100 umfasst eine erste Hülse 202, einen Auslasskopf 204 mit der an diesem befestigbaren Dampflanze 50 und eine zweite Hülse 102 mit einem Bedienungselement 101. Die abgewinkelte Aufnahme 201 dient zur Befestigung der Hülse 202 und damit der Bedieneinheit an der Kaffeemaschine 200.

Gemäss Fig. 2 sind der Auslasskopf 204 mit der daran angebrachten Dampflanze 50 und die Hülse 102 mit dem Bedienungselement 101 an gegenüberliegenden Seiten der Hülse 202 jeweils durch Lagerringe 205, 206 relativ zueinander verdrehbar gelagert. Eine an dem Auslasskopf 204 angebrachte Dampflanze 50 mit einem Griff 51 ist somit um eine Drehachse DA relativ schwenkbar zu der Hülse 102 mit dem Bedienungselement 101 gehalten. Dies ermöglicht ein komfortables Einführen bzw. Herausnehmen dieser Dampflanze 50 in oder aus einer Tasse oder ein Gefäss, die in ihrer Grösse variieren. Nach dem Einführen kann die darin befindliche Milch aufgeheizt bzw. aufgeschäumt werden.

Im Zentrum der Hülsen 102, 202 befindet sich ein Proportionalventil 210 mit einem Ventilbolzen 212, der mit dem Bedienungselement 101 zur Abgabe von Medien aus der Medienzuleitung 203 in die Dampflanze 50 gesteuert werden kann. Die Hülse 102 mit dem Bedienungselement 101 ist mittels dem Lagerring 205 dicht an der Hülse 202 geführt. Die Hülse 102 ist dabei mechanisch derart mit dem Ventilbolzen 212 in der Ventilhülse 211 des Proportionalventils 210 verbunden, dass sich das Proportionalventil 210 mit dem Bedienungselement 101 steuern lässt. Durch den Ventilbolzen 212 wird die Medienleitung 203 geschlossen, teilweise, halb oder ganz geöffnet.

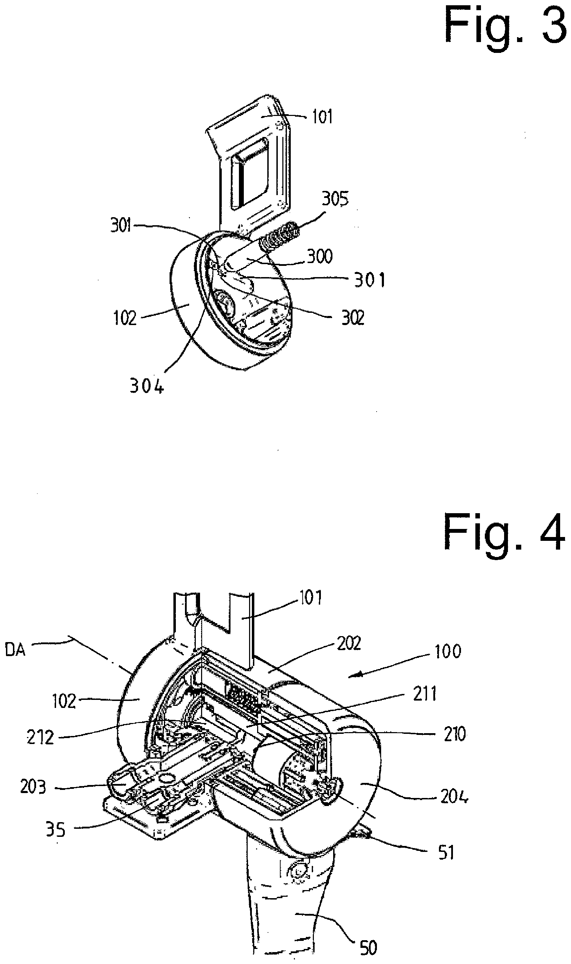

Im Rahmen der Erfindung verfügt die Hülse 102 über ein in Fig. 3 erkennbares Profil 301, welches in Richtung der Drehachse DA gestuft ist. Es weist dabei einen stufenförmigen Verlauf 304, einen teilweise rampenförmigen Verlauf 303 und eine Stufe 302 für eine Grundstellung des Bedienungselements auf, bei welcher das Proportionalventil 210 geschlossen und somit keinen Dampf abgibt.

Dieses Profil 301 steht dabei mit einem mit einer Feder 305 beaufschlagten Stift 300 in Wirkverbindung, welche die Einrastmittel bilden und durch welche die Führungs- und Einrastfunktionen für das Bedienungselement 101 bewirkt werden. Diese Feder 305 und der von ihr beaufschlagte Stift 300 sind in der feststehenden Hülse 202 senkrecht zum Profil 301 axial verstellbar gelagert.

Mit diesem in seiner Längsachse beweglichen Stift 300 könnte auch eine zusätzliche elektrische Funktion ausgeübt werden, beispielsweise in Form einer Positionsabtastung oder dergleichen für eine elektrische Steuerung des Proportionalventils 210 mit einem Motor oder einem Stellantrieb.

Idealerweise verfügt das verdeckte Profil 301 über einen teilweise stufenförmigen Verlauf 304 mit einer Vielzahl an Stufen für voreingestellte Stellungen, die einer Vielzahl an unterschiedlichen gewünschten Dampfabgaben entsprechen.

Zusätzlich verfügt das Profil 301 über einen rampenförmigen Verlauf 303, durch den sich variierbare Stellungen des Bedienungselements 101 ergeben, bei der die Dampfabgabe durch das Proportionalventil 210 über keine voreingestellte Stellung bestimmt wird, sondern stufenlos verstellt werden kann und damit die Dampfmenge manuell eingestellt bzw. verändert wird. Der rampenförmige Verlauf 303 des Profils 301 bewirkt mit der Feder 305 und dem Stift 300 zusammen, dass die Hülse und mit ihr das Bedienungselement 101 beim Loslassen desselben nach einer Schwenkbewegung selbsttätig wieder zurück in die Grundstellung bei geschlossenem Ventil für den Dampf bewegt wird.

Fig. 4 zeigt bei der Bedieneinheit 100 die Medienzuleitung 203 für den Dampf und/oder Luft sowie eine in die Kaffeemaschine führende Entlüftungsleitung 35, die nachfolgend erläutert ist.

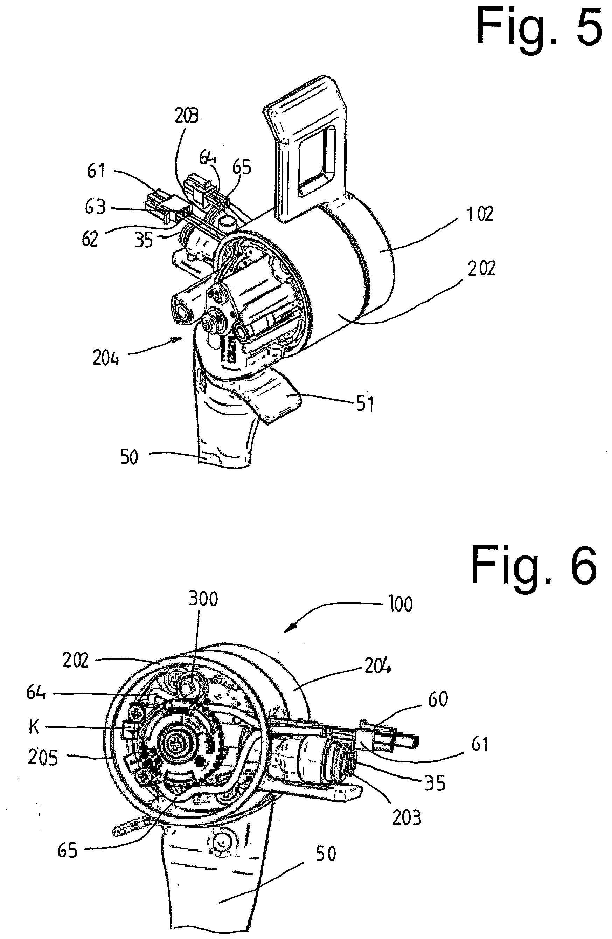

Fig. 5 und Fig. 6 zeigen elektrische Komponenten der Bedieneinheit 100, von denen ein elektrischer Anschluss 60 mit den Leitungen 62, 63 einen am unteren Ende der Dampfpflanze 50 integrierten Temperatursensor T mit einer ebenfalls nicht abgebildeten elektronischen Steuereinheit S zur Messung der Temperatur der Milch verbindet.

Der weitere elektrische Anschluss 61 im Inneren der Hülsen 102, 202 verbindet mit den Leitungen 64, 65 eine in den Hülsen 102, 202 integrierte elektrische Komponente K mit der elektronischen Steuereinheit S zur Richtungserkennung der Auslenkung des Bedienungselements 101. Bei einer solchen elektrischen Komponente K kann es sich um einen einfachen elektrischer Schalter oder einen Sensor handeln, der diese Richtungserkennung der Auslenkung des Bedienungselements 101 feststellen kann.

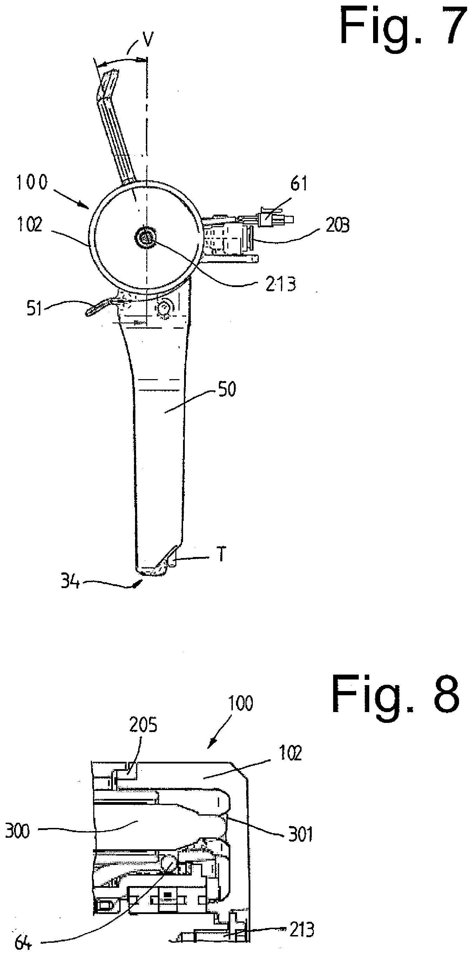

Fig. 7 zeigt das Bedienungselement 101 der Bedieneinheit 100 in einer voreingestellten Stellung, bei der eine bestimmte Menge Dampf ausgelassen wird. Das Bedienungselement 101 weist eine Auslenkung gegenüber der Grundstellung um einen bestimmten Winkel, zum Beispiel 17°, auf, wobei von der Vertikalachse V aus gesehen ausgelenkt ist.

Fig. 8 zeigt die Hülse 102 und den Stift 300 auf einer ersten Stufe des im Querschnitt gezeigten teilweise stufenförmigen Verlaufs 304 des Profils 301 befindet, die einer voreingestellten Stellung mit einer bestimmten Dampfmenge entspricht.

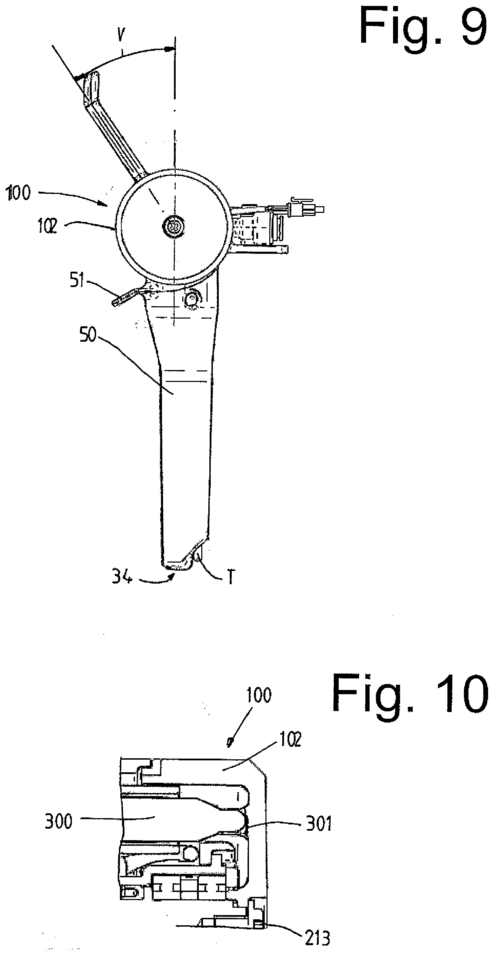

Gemäss Fig. 9 ist das Bedienungselement 101 in eine voreingestellte Stellung als zweite Stufe geschwenkt, bei dem es um einen Winkel von beispielsweise 34° von der Grundstellung aus gedreht ist. In dieser zweiten Stufe erfolgt das Auslassen von Dampf in einer grösseren Menge pro Zeiteinheit als in der ersten Stufe. Diese Menge ist dabei so eingestellt, dass die Milch in der Tasse oder dem Gefäss in einer annähernd idealen Zeitspanne erhitzt wird, denn es sollte verhindert werden, dass die Milch zu schnell aufgeheizt wird.

Mit den dargestellten Auslenkungswinkeln von 17° und 34° kann ein Benutzer mit einer schnellen Handbewegung von der einen zur andern Stufe wechseln. Die Auslenkungswinkel werden auch in Abhängigkeit der Länge des Bedienungselements 101 und dessen Anbringung an der Bedieneinheit 100 bestimmt. Sowohl bei einer mechanischen als auch bei einer elektrischen Steuerung des Proportionalventils 210 kann eine Öffnungsweite des Proportionalventils 210 proportional zur Auslenkung des Bedienungselements 101 erfolgen.

Fig. 10 zeigt die Hülse 102 und den Stift 300 auf der zweiten Stufe des stufenförmigen Verlaufs 304 des Profils 301, die der voreingestellten Stellung des Bedienungselements 101 nach Fig. 9 für die bestimmte Dampfmenge entspricht.

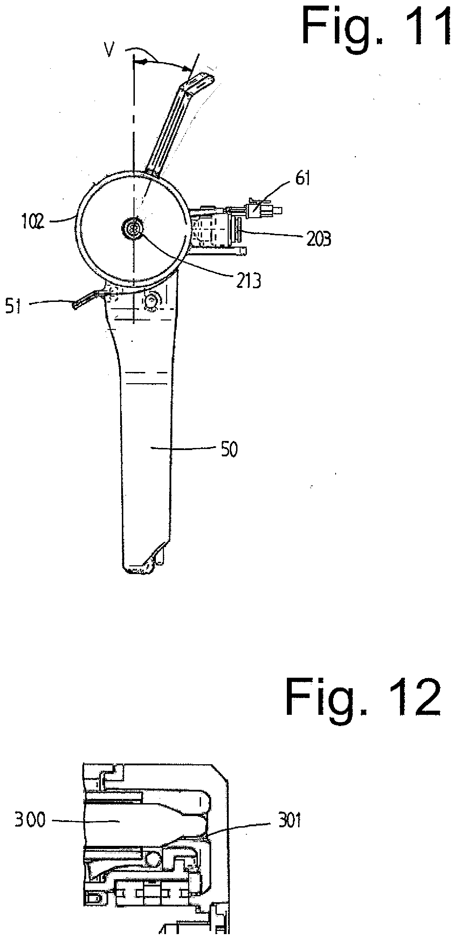

Fig. 11 zeigt das Bedienungselement 101 der Bedieneinheit 100 in einer anderen Stellung mit einer Auslenkung in entgegengesetzter Richtung zu den Stellungen gemäss Fig. 7 und Fig. 9 um die Vertikalachse V, die der Grundstellung entspricht.

Fig. 12 zeigt die Hülse 102 und den Stift 300 auf der rampenförmigen Stufe des stufenförmigen Verlaufs 304 des Profils 301, bei dem das Bedienungselement 101 annähernd stufenlos bis zu der Stellung gemäss Fig. 11 ausgelenkt werden kann, um so die Dampfmenge beliebig zu wählen.

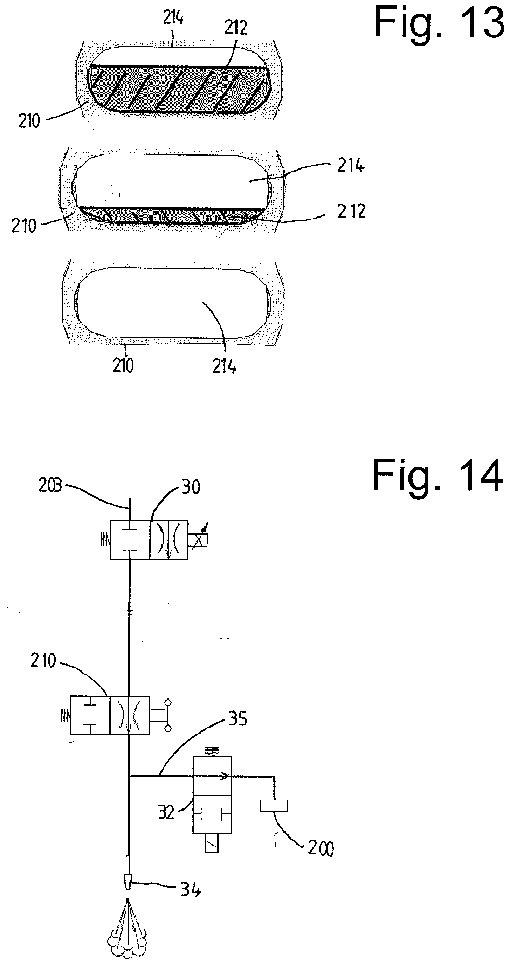

Fig. 13 zeigt den Querschnitt der Öffnung 214 der Ventilhülse des Proportionalventils 210 in den Stufen von nahezu geschlossen, bei halb offen in der ersten Stufe bei 17° und bei voll offenem Ventil. Vorzugsweise ist der Querschnitt der Öffnung 214 und der diesen öffnende bzw. schliessende Ventilbolzen 212 annähernd rechteckig ausgebildet, so dass sich eine annähernd lineare Veränderung der Durchflussmenge des Dampfes ergibt. Zudem ist durch die Verschieberichtung des Ventilbolzens 212 quer zur Längserstreckung der Öffnung 214 nur eine kurze Auslenkung des Bedienungselements 101 von der geschlossenen zu vollen Offenstellung und umgekehrt erforderlich. Fig. 14 zeigt ein Hydraulikschema mit einer Medienzuleitung 203, einem Hauptventil 30, einem Proportionalventil 210, einer Entlüftungsleitung 35, einem Ventil 32 und einer Dampfauslassöffnung 34 der nicht abgebildeten Dampflanze 50. Die Medienleitung 203 dient der Zuführung von Dampf und/oder Luft zur Erhitzung bzw. Aufschäumung von Milch und verbindet einen in der nicht näher gezeigten Kaffeemaschine befindlichen Dampfboiler mit dem Hauptventil 30 und dem Proportionalventil 210, welches wiederum mit der Dampfauslassöffnung 34 der Dampflanze 50 verbunden ist.

Das Hauptventil 30 öffnet bzw. schliesst nach Betätigung des Bedienungselements 101. Bei zuvor mit dem Bedienungselement 101 ausgewählten voreingestellten Stellungen, beispielsweise bei einem Auslenkungswinkel von 17° oder von 34°, bleibt das Hauptventil 30 so lange zur Dampfabgabe geöffnet, bis diese elektronische Steuereinheit S aufgrund des mit dem Temperatursensor T gemessenen Temperaturwerts von aufzuschäumender Milch das Hauptventil 30 wieder schliesst, sobald ein Sollwert der aufgeheizten Milch erreicht wird.

Das Bedienungselement 101 verbleibt beim automatischen Schliessen des Hauptventils 30 durch die elektronische Steuereinheit S in der ausgelenkten Stellung und muss von Hand wieder in die Grundstellung zurückgeschwenkt werden. Diese könnte im Rahmen der Erfindung auch automatisch durch eine geeignete elektrische und/oder mechanische Vorrichtung erfolgen.

Das Proportionalventil 210 wird von dem Bedienungselement 101 zur Abgabe einer Dampfmenge mit einer gewünschten Dampfabgabe entsprechend einer Stellung des Bedienungselements 101 gesteuert. Zudem ist auch eine Regulierung einer einstellbaren Dampftemperatur durch Beimischung von Luft zu der Dampfmenge durch das Proportionalventil 210 im Rahmen der Erfindung möglich.

Die Entlüftungsleitung 35 verbindet das Ventil 32 mit dem Inneren der Kaffeemaschine 100 und ist dort offen, sodass bei geöffnetem Ventil 32 Luft aus dem Inneren der Kaffeemaschine 100 in die Dampflanze 50 fliessen kann, um darin ein Vakuum und folglich ein Rücksaugen von Milch in die Dampflanze zu vermeiden, weil die heisse Milch in dieser anbacken und diese verstopfen würde. Das Ventil 32 öffnet für eine Entlüftung, wenn das Hauptventil 30 bzw. das Proportionalventil 210 schliesst, und das Ventil 32 schliesst für eine Entlüftung, wenn das Proportionalventil 210 öffnet.

Die Erfindung ist mit dem erläuterten Ausführungsbeispiel ausreichend dargetan. Sie könnte aber noch durch andere Varianten veranschaulicht sein. So könnte das Bedienungselement theoretisch auch anstelle von einer Schwenkbewegung linear in einer Schiene oder ähnlichem oder durch ein Drehen in seiner Achsrichtung verstellt werden. Es sind vorteilhaft diese beiden Einraststellungen bei dem Drehen des Bedienungselements vorgesehen. Es könnte aber auch nur die eine oder die andere vorgesehen sein.

## Patentansprüche

1. Bedieneinheit für die Abgabe von Dampf aus einer Kaffeemaschine oder dergleichen, wobei die Bedieneinheit (100) eine feststehende Hülse (202), einen an dieser verstellbar gehaltenen Auslasskopf (204) mit einer an diesem befestigbaren Dampflanze (50) und eine verstellbare Hülse (102) mit dem Bedienungselement (101) aufweist, wobei Einrastmittel vorgesehen sind, durch welche die Hülse (102) mit dem Bedienungselement (101) in einer Grundstellung, bei der keine Dampfabgabe erfolgt, und von dieser Grundstellung in einer Richtung in mindestens einer Stellung für die Abgabe von wenigstens einer bestimmten Dampfmenge einrastbar ist, wobei die Hülse in Gegenrichtung dazu verstellbar ist, bei der die Dampfmenge annähernd stufenlos veränderbar ist, wobei die Einrastmittel aus einem in der Hülse (102) angeordneten Profil (301) und einem mit diesem in Wirkverbindung stehenden, von einer Feder (305) beaufschlagten axial verstellbaren Stift (300) in der feststehenden Hülse (202) gebildet sind, welche die Führungs- und Einrastfunktionen für das Bedienungselement (101) bilden, wobei dem in der Hülse (102) angeordneten Profil (301) eine Stufe für die Grundstellung, ein stufenförmiger Verlauf (304) für die Einraststellungen und ein sich von der Stufe in Gegenrichtung erstreckender rampenförmiger Verlauf für die stufenlose Verstellung des Bedienungselements (101) zugeordnet sind.

2. Bedieneinheit nach Anspruch 1, **dadurch gekennzeichnet, dass** der Auslasskopf (204) mit der daran befestigbaren Dampflanze (50) und die Hülse (102) mit dem Bedienungselement (101) an gegenüberliegenden Seiten der Hülse (202) jeweils verdrehbar gelagert sind.

3. Bedieneinheit nach Anspruch 1 oder 2, **dadurch gekennzeichnet, dass**
sich in den Hülsen (102, 202) ein Proportionalventil (210) mit einem Ventilbolzen (212) in einer Ventilhülse (211) mit einer Öffnung (214) befindet, wobei dieser Ventilbolzen (212) mit dem Bedienungselement (101) zum Durchlass von Dampf aus der Medienzuleitung (203) in die Dampflanze (50) steuerbar ist.

4. Bedieneinheit nach Anspruch 3, **dadurch gekennzeichnet, dass** der durch die Öffnung (214) in der Ventilhülse (211) und der diesen öffnenden bzw. schliessenden Ventilbolzen (212) gebildete Querschnitt beim Proportionalventil (210) annähernd rechteckig ausgebildet ist, so dass sich eine nahezu lineare Veränderung der Durchflussmenge des Dampfes ergibt.

5. Bedieneinheit nach einem der vorangegangenen Ansprüche 1 bis 4, **dadurch gekennzeichnet, dass**
dem Dampfauslass durch die Dampflanze (50) eine Entlüftungseinrichtung mit einem Entlüftungsventil (32) zugeordnet ist, durch welches bei unterbrochener Dampfzuführung insbesondere Atmosphärenluft zuführbar ist, damit ein Rücksaugen von Milch aus dem Behälter in die Dampflanze durch Vakuumbildung verhindert werden kann.

6. Verfahren zum manuellen Steuern einer Bedieneinheit nach einem der vorangegangenen Ansprüche 1 bis 5, bei dem durch ein von Hand verstellbares Bedienungselement (101) der Dampf aus einer Dampflanze (50) gesteuert abgegeben werden kann, wobei das Bedienungselement (101) eine eingerastete Grundstellung einnimmt, bei der keine Dampfabgabe erfolgt, und es von dieser Stellung entweder in eine eingerastete Stellung für die Abgabe einer bestimmten Dampfmenge verstellt werden kann, oder sich beim Verstellen die Dampfmenge verändert, wobei das Bedienungselement (101) von dieser Grundstellung aus in eine Richtung in mindestens eine eingerastete Stellung für die Abgabe von wenigstens einer bestimmten Dampfmenge und in Gegenrichtung dazu verstellt werden kann, bei der sich beim Verstellen die Dampfmenge annähernd stufenlos verändert.

7. Verfahren nach Anspruch 6, **dadurch gekennzeichnet, dass** die Temperatur der Milch mit dem Verstellen des Bedienungselements (101) in diese mindestens eine eingerastete Stellung gemessen und die Dampfabgabe bei Erreichen eines Sollwertes der Milchtemperatur gestoppt wird.

8. Verfahren nach Anspruch 7, **dadurch gekennzeichnet, dass** das Bedienungselement (101) nach dem Verstellen in der jeweiligen eingerasteten Stellung verbleibt und von Hand wieder zurück in die Grundstellung verstellt werden muss oder selbsttätig zurückschwenkt.

9. Verfahren nach einem der vorangegangenen Ansprüche 6 bis 8, **dadurch gekennzeichnet, dass**
das Bedienungselement (101) von dieser Grundstellung aus in die eine Richtung in zwei nacheinander folgende eingerastete Stellungen für die Abgabe von zwei unterschiedlichen Dampfmengen verschwenkbar ist.

10. Verfahren nach einem der vorangegangenen Ansprüche 6 bis 9, **dadurch gekennzeichnet, dass**
bei der Verstellung des Bedienungselements (101) in die Gegenrichtung die Dampfmenge von einer minimalen bis zu einem maximalen Wert verändert wird, und das Bedienungselement (101) selbsttätig in die Grundstellung zurückschwenkt.

11. Kaffeemaschine mit einer Bedieneinheit (100) nach einem der vorangegangenen Ansprüche 1 bis 5, **dadurch gekennzeichnet, dass** in der Kaffeemaschine (200) ein Dampfboiler mit einer durch ein Hauptventil (30) schliessende oder öffnende, in die Bedieneinheit (100) führende Medienleitung (203) und eine elektronische Steuereinheit vorhanden sind, wobei die Steuereinheit durch einen elektrischen Anschluss (60) bei der Bedieneinheit (100) mit einem am unteren Ende der Dampflanze (50) integrierten Temperatursensor (T) verbunden ist, wobei das Hauptventil (30) von der Steuereinheit betätigbar ist.

12. Kaffeemaschine nach Anspruch 11, **dadurch gekennzeichnet, dass** das Hauptventil (30) von der Steuereinheit schliessbar ist, wenn die Steuereinheit feststellt, dass die vom Temperatursensor (T) gelieferte Ist-Temperatur den eingestellten Sollwert übersteigt.

## Claims

1. Operating unit for the delivery of steam from a coffee machine or the like, wherein the operating unit (100) has a fixed sleeve (202), an outlet head (204) adjustable held on this, a steam lance (50) attachable to this, and an adjustable sleeve (102) with the operating element (101), wherein engaging means are provided, with which the sleeve (102) can be engaged with the operating element (101) in a basic position, in which no steam is discharged, and from this basic position in a direction of at least one engaged position for the discharge of at least one specific quantity of steam, wherein the sleeve is adjustable in the opposite direction, with which the quantity of steam can be adjusted almost continuously, wherein the engaging means are formed from a shaped section (301) arranged in the sleeve (102) and an axially adjustable pin (300) acted on by a spring (305) in the fixed sleeve (202), which is in action connection with the shaped section, wherein associated with the shaped section (301) arranged in the sleeve (102) are a step for the basic position, a step-like progression (304) for the engagement positions and a ramp shaped gradient extending from the step in the opposite direction for the continuous adjustment of the operating element (101).

2. Operating unit in accordance with claim 1, **characterised in that** the outlet head (204) with the attached steam lance (50) at it and the sleeve (102) with the operating element (101) on opposite sides of the sleeve (202) are each rotatably mounted.

3. Operating unit in accordance with claim 1 or 2, **characterised in that** in the sleeves (102, 202) there is a proportional valve (210) with a valve pin (212) in a valve sleeve (211) with an opening (214), whereby this valve pin (212) with the operating element (101) can be controlled for the passage of steam from the media supply (203) into the steam lance (50).

4. Operating unit in accordance with claim 3, **characterised in that** the cross-section formed with the proportional valve (210) by the opening (214) in the valve sleeve (211) and the valve pin (212) opening or closing this has an approximately rectangular form, so that there is an almost linear variation of the throughflow rate of the steam.

5. Operating unit in accordance with one of the preceding claims 1 to 4, **characterised in that**
a venting device with a vent valve (32) is assigned to the steam outlet through the steam lance (50), through which, in the event of interrupted steam supply, atmospheric air in particular can be supplied, so that a return of milk from the container into the steam lance by vacuum formation can be prevented.

6. Method for manually controlling an operating unit in accordance with one of the preceding claims 1 to 5, in which the steam can be delivered from a steam lance (50) under control by a manually adjustable operating element (101), wherein the operating element (101) adopts a basic engaged position, in which no steam is discharged and can either be adjusted from this position to an adjusted position for the release of a specific quantity of steam or changing the quantity of steam with the adjustment, wherein the operating element (101) can be adjusted from this basic position in a direction of at least one engaged position for the delivery of at least a specific quantity of steam and in the opposite direction to that, where the quantity of steam varies approximately continuously during adjustment.

7. Method according to claim 6, **characterised in that**
the temperature of the milk is measured with the adjustment of the operating element (101) into this at least one engaged position and the output of steam is stopped when a target milk temperature is reached.

8. Method according to claim 7, **characterised in that**
the operating element (101) remains in the respective engaged position following adjustment and must be returned again back to the basic position manually or automatically pivots back.

9. Method in accordance with one of the preceding claims 6 to 8, **characterised in that** the operating element (101) can be pivoted in one direction from this basic position into two successive following engaged positions for the delivery of two different quantities of steam.

10. Method in accordance with one of the preceding claims 6 to 9, **characterised in that** during the adjustment of the operating element (101) in the opposite direction, the quantity of steam varies from a minimum to a maximum value, and the operating element (101) automatically pivots back to the basic position.

11. Coffee machine with an operating unit (100) in accordance with one of the preceding claims 1 to 5, **characterised in that**
the coffee machine (200) contains a steam boiler with a media line (203), closed or opened by a main valve (30), leading to the operating unit (100) and an electronic control unit, wherein the control unit is connected by an electrical connection (60) to the operating unit (100) with a temperature sensor (T) integrated with the steam lance (50) at the lower end, wherein the main valve (30) can be operated by the control unit.

12. Coffee machine in accordance with claim 11, **characterised in that** the main valve (30) can be closed by the control unit, when the control unit determines, that the actual temperature delivered by the temperature sensor (T) exceeds the preset target temperature.

## Revendications

1. Unité de commande de distribution de vapeur dans une machine à café ou analogue, dans laquelle l'unité (100) de commande a un manchon (202) fixe, une tête (204) de sortie, retenue de manière réglable à celui-ci et ayant une lance (50) à vapeur pouvant être fixée à celle-ci, et un manchon (102) réglable ayant l'élément (101) de commande, dans laquelle il est prévu des moyens d'encliquetage par lesquels le manchon (102) peut être encliqueté à l'élément (101) de commande dans une position de base, dans laquelle il n'y a pas de distribution de vapeur et, à partir de cette position de base, en direction d'au moins une position de distribution d'au moins une quantité déterminée de vapeur, le manchon étant à cet effet réglable dans le sens contraire, dans laquelle la quantité de vapeur peut être modifiée à peu près sans palier, dans lequel les moyens d'encliquetage sont constitués d'un profilé (301) disposé dans le manchon (102) et d'une broche (300), en liaison d'action avec celui-ci, réglable axialement sous l'action d'un ressort (305) dans le manchon (202) fixe, qui forment les fonctions de guidage et d'encliquetage de l'élément (101) de commande, dans laquelle au profilé (301) disposé dans le manchon (102) sont associés un palier pour la position de base, un tracé (304) sans palier pour les positions d'encliquetage et un tracé en forme de rampe, s'étendant dans le sens contraire à partir du palier, pour le réglage sans palier de l'élément (101) de commande.

2. Unité de commande suivant la revendication 1, **caractérisée en ce que** la tête (204) de sortie ayant la lance (50) à vapeur qui peut y être fixée, et le manchon (102) ayant l'élément (101) de commande sont montés avec possibilité respectivement de tourner sur des faces opposées du manchon (202).

3. Unité de commande suivant la revendication 1 ou 2, **caractérisée en ce que**, dans les manchons (102, 202) se trouve une soupape (210) proportionnelle ayant un axe (212) de soupape dans un manchon (211) de soupape ayant une ouverture (214), dans laquelle cet axe (212) de soupape peut être commandé par l'élément (101) de commande pour le passage de vapeur d'un conduit (203) d'apport de fluide à la lance (50) à vapeur.

4. Unité de commande suivant la revendication 3, **caractérisée en ce que** la section transversale formée par l'ouverture (214) du manchon (211) de soupape et l'axe (212) de soupape l'ouvrant et la fermant est, pour la vanne (210) proportionnelle, constituée de manière à peu près rectangulaire, de manière à obtenir une variation à peu près linéaire de la quantité de passage de la vapeur.

5. Unité de commande suivant l'une des revendications 1 à 4 précédentes, **caractérisée en ce qu'**à la sortie de la vapeur par la lance (50) à vapeur est associée un dispositif de purge ayant une soupape (32) de purge par laquelle, lorsque l'apport de vapeur est interrompu, notamment de l'air atmosphérique peut être apporté afin de pouvoir empêcher une aspiration en retour du lait du récipient à la lance à vapeur par formation de vide.

6. Procédé de commande manuelle d'une unité de commande suivant l'une des revendications 1 à 5 précédentes, dans lequel on peut, par un élément (101) de commande réglable à la main, distribuer de manière commandée de la vapeur d'une lance (50) à vapeur, dans lequel l'élément (101) de commande prend une position de base encliquetée, dans laquelle il n'y a pas de distribution de vapeur et on peut le régler à partir de cette position, soit dans une position encliquetée pour la distribution d'une quantité déterminée de vapeur, soit modifier par réglage la quantité de vapeur, dans lequel on peut régler l'élément (101) de commande à partir de cette position de base, dans un sens dans au moins une position encliquetée pour la distribution d'au moins une quantité déterminée de vapeur et dans le sens contraire à cela, dans lequel lors du réglage la quantité de vapeur se modifie à peu près sans palier.

7. Procédé suivant la revendication 6, **caractérisé en ce que** l'on mesure la température du lait avec l'élément (101) de commande dans cette position au moins encliquetée et on arrête la distribution de vapeur lorsqu'est atteinte une valeur de consigne de la température du lait.

8. Procédé suivant la revendication 7, **caractérisé en ce que** l'élément (101) de commande reste, après le réglage dans la position encliquetée respective, et doit être ramené à la main à nouveau dans la position de base ou repivote automatiquement.

9. Procédé suivant l'une des revendications 6 à 8, **caractérisé en ce que**
l'élément (101) de commande peut pivoter de cette position de base, dans le un sens, dans deux positions encliquetées successives, pour la distribution de deux quantités différentes de vapeur.

10. Procédé suivant l'une des revendications 6 à 9 précédentes, **caractérisé en ce que**
lors du réglage de l'élément (101) de commande dans le sens contraire, on modifie la quantité de vapeur d'une valeur minimum à une valeur maximum et l'élément (101) de commande repivote automatiquement dans la position de base.

11. Machine à café ayant une unité (100) de commande suivant l'une des revendications 1 à 5 précédentes, **caractérisée en ce que** il y a, dans la machine (200) à café, une chaudière à vapeur ayant un conduit (203) pour des fluides, se fermant ou s'ouvrant par une soupape (30) principale et menant à l'unité (100) de commande, et une unité électronique de commande, l'unité de commande étant connectée par une borne (60) électrique pour l'unité (100) de commande à une sonde (T) de température intégrée à l'extrémité inférieure de la lance (50) à vapeur, la soupape (30) principale pouvant être actionnée par l'unité de commande.

12. Machine à café suivant la revendication 11, **caractérisée en ce que** la soupape (30) principale peut être fermée par l'unité de commande, si l'unité de commande constate que la température réelle donnée par la sonde (T) de température dépasse une valeur de consigne réglée.
